# EUROPEAN PATENT SPECIFICATION

(11) **EP 0 516 239 B1**
(45) Date of publication and mention of the grant of the patent: **06.08.1997**
(21) Application number: 92201509.4
(22) Date of filing: 26.05.1992
(51) Int. Cl.: C08G 67/02

(54) **Process for the preparation of linear polymers of carbon monoxide with one or more olefinically unsaturated compounds**
Verfahren zur Herstellung von linearen Polymeren aus Kohlenmonoxyd und einer oder mehreren olefinisch ungesättigten Verbindungen
Procédé de préparation de polymères linéaires à partir de monoxyde de carbone et d'un ou plusieurs composés oléfiniquement insaturés

(30) Priority: 29.05.1991 EP 91201318
(43) Date of publication of application: 02.12.1992
(73) Proprietor: SHELL INTERNATIONALE RESEARCH MAATSCHAPPIJ B.V., 2596 HR Den Haag (NL)
(72) Inventor: Buijsingh, Paulus David, NL-2596 HR The Hague (NL); Lindhout, Izaak, NL-2596 HR The Hague (NL)

(56) References cited:
- EP-A- 0 340 844
- EP-A- 0 412 620

## Description

The invention relates to a process for the preparation of polymers of carbon monoxide with one or more olefinically unsaturated compounds.

The relevant polymers are linear alternating polymers, i.e. linear polymers in which the units originating in carbon monoxide and the units originating in the olefinically unsaturated compounds occur substantially in alternating order. These polymers can be prepared by contacting the monomers at an elevated temperature and pressure with a catalyst in the presence of a diluent in which the polymers are insoluble or virtually insoluble, and in which the polymers thus form a suspension.

For some years, the Applicant has been carrying out extensive research into this polymer preparation. Initially, the research was substantially directed towards catalyst improvement. The experiments required for this research were substantially carried out in small reactors containing less than 1 kg diluent. In order to ensure thorough mixing of the reaction components, these reactors were provided with a stirring device. The stirring speed was, quite arbitrarily, set at a rather high level. In view of the relatively low costs associated with stirring in small reactors, no attention was paid in the past to the question as to whether the same or virtually the same polymerization result might be achieved with slower stirring.

With a view towards commercial scale polymer preparation, some of the polymerization experiments have, for some time, been conducted in larger reactors containing more than 10 kg diluent. With the use of these reactors, and to a much greater extent with the use of commercial-scale reactors containing more than 1,000 kg diluent, the costs associated with stirring in such reactors play an important role.

Before changing from small reactors to larger reactors containing more than 10 kg diluent, an investigation was carried out in order to find out which relationship exists, in the use of the latter reactors, between the power transmitted by the stirring device to the polymer suspension (hereinafter termed "power density" for short and expressed in kW/m³, relative to the volume of the suspension present in the particular reactor) on the one hand and the polymerization results on the other hand. The investigation revealed that, for a stirred reactor with a geometry suitable for homogenizing suspensions, the power density at which the polymerization rate amounts to approximately 90% of the maximum value is below 0.5 kW/m³.

As no indications had been obtained that it could be of any use to carry out polymerizations in reactors containing more than 10 kg diluent at power densities of more than 0.5 kW/m³, after the change from small reactors to larger reactors containing more than 10 kg diluent, power densities of not more than 0.5 kW/m³ were used.

It has now been found that the bulk density of the alternating polymers, when prepared in reactors containing more than 10 kg diluent, is greatly dependent on the power density used in the preparation. It has been found that when high power densities are used, polymers with a high bulk density can be prepared.

It has further been found that such high power densities can be transmitted to the reaction mixture by forcing the suspension, containing the polymer particles, through at least one mechanical contact zone.

The present patent application therefore relates to a process for the preparation of polymers in which process linear alternating polymers of carbon monoxide with one or more olefinically unsaturated compounds are prepared by contacting the monomers at an elevated temperature and pressure with a catalyst in a diluent in which diluent the catalyst is dissolved and the formed polymers form a suspension, which contacting takes place in a system comprising at least one reactor and at least one mechanical contact zone wherein the volume of the suspension present in the mechanical contact zone(s) is substantially less than the volume of the suspension present in the reactor(s), the suspension is passed through the mechanical contact zone(s) and high shearing forces are exerted on the polymer particles dispersed in the suspension present in the mechanical contact zone(s).

A skilled reader will be aware that the bulk density is one of the most important properties of the polymer powder obtained from the polymerisation reactor. The bulk density plays an important role in the preparation, the purification, the storage, the transport and the processing of the alternating polymers. In the polymer preparation the bulk density determines the quantity of polymer that can be prepared in a certain reactor volume. In the polymer purification, such as in filtering, washing and drying, the quantity of adhering liquid is largely determined by the polymer bulk density. As far as transport and storage are concerned, the rule is that the higher the polymers' bulk density, the more attractive the flow behaviour they will have and the less space they will occupy. As far as the processing of the polymers into shaped objects is concerned, polymer powders with a high bulk density may not need to be compacted in order to make them suitable for further processing in the usual equipment.

It is speculated that the solid polymer particles that are formed in the diluent in the reactor grow in random directions instead of forming regular spherical particles. Thus they have irregular shapes, which means that their surface area is larger than the surface area of spherical particles of equal mass. This causes a rather "fluffy" product, i.e. having a low bulk density. The present invention therefore entails that substantially each particle of irregular shape is subjected to a mechanical force which is greater than its agglomeration force, whereby irregular "spikes" are broken off and the shape of the particle becomes more regular (spherical). In other words the specific surface area (the surface area per unit of mass) of a substantial part of the solid polymer particles is reduced. The expression "a substantial part of the solid polymer particles" used herein is defined as meaning at least 50%, preferably at least 90%.

The mechanical contact zone(s) may be supplemental to any conventional stirrers present in the reactor(s), or may replace them. It should be understood that before the present invention, in larger reactors there was no incentive to set the power density of any stirrer at a higher level than needed to obtain a good mix of the reactants (as measured by the reaction rate). Therefore the power densities applied by stirrers up to now were insufficient to achieve a substantial decrease of the surface area of the polymer particles.

A mechanical contact zone is a part of the system inside or outside the reactor vessel(s) which part has a substantially smaller volume than the suspension present in the reactor(s) and through which part the suspension containing polymer particles is passed. In the mechanical contact zone high shearing forces are exerted on the polymer particles. Suitably the total volume of the suspension present in the mechanical contact zone(s) is less than 10% of the total volume of the suspension present in the reactor(s). Preferably the ratio of the total volume of the suspension present in the mechanical contact zone(s) to the total volume of the suspension present in the reactor(s) amounts to from 1:500000 to 1:20, more preferably from 1:50000 to 1:50. Suitably the mechanical contact zone is a part of the system in which the diluent containing the catalyst is brought into contact, by mechanical means, with the polymer particles formed in other parts of the reactor system, and optionally also with monomeric starting materials.

The suspension on which high shearing forces are exerted in the mechanical contact zone may have been withdrawn from one of the reactors and may be discharged into the same reactor after having passed a mechanical contact zone. If the system comprises two or more reactors it may be advantageous to withdraw the suspension from a first reactor and to discharge the suspension into a second reactor after having been subjected to high shearing forces in the mechanical contact zone. The latter may in particular be advantageous in a continuous process.

As mentioned hereinbefore the shearing forces imparted to the polymer suspension should be high in the polymerization process according to the invention. From experiments in a pilot plant unit it has been found that very good polymerization results can be obtained if the mechanical power transmitted in the mechanical contact zone(s) to the polymer suspension is in the range of from 0.25 to 50 kW/m³, relative to the total volume of the polymer suspension present in the reactor(s), preferably from 2 to 40 kW/m³ and in particular from 4 to 25 kW/m³.

The mechanical contact zone suitably comprises a device suitable for intensive mixing, dispersing, homogenising, emulsifying and/or size reduction of solid particles in liquid media such as a (toothed, colloid or corundum disk) rotor-stator device, a ball-mill, a rod-mill, a screw-pump, or an injector-mixing nozzle. Good results have been obtained with an injector-mixing nozzle.

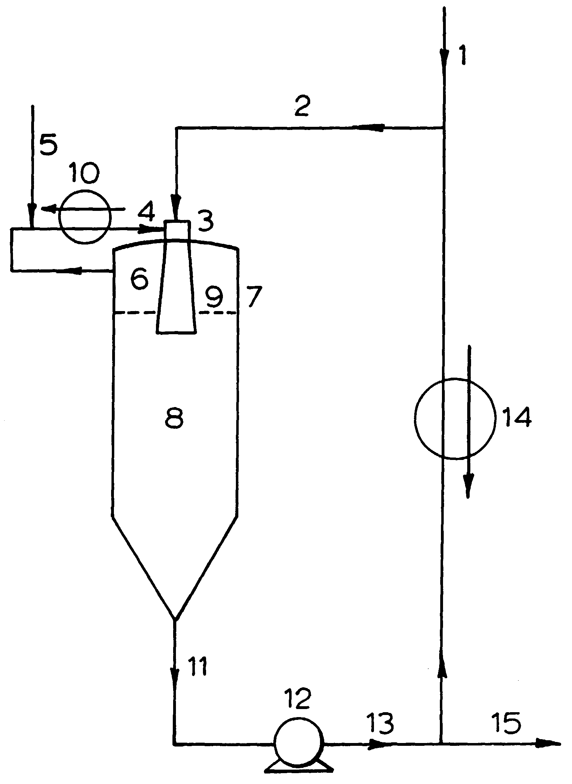

The injector-mixing nozzle(s) can advantageously be executed as venturi tubes (cf. "Chemical Engineers' Handbook" by J.H. Perry, 3rd edition (1953), p. 1285, Fig. 61), preferably as an injector mixer (cf. "Chemical Engineers' Handbook" by J.H. Perry, 3rd edition (1953), p. 1203, Fig. 2 and "Chemical Engineers' Handbook" by R.H. Perry and C.H. Chilton, 5th edition (1973) p. 6-15, Fig. 6-31) or most preferably as a water-jet ejector (cf. "Unit Operations" by G.G. Brown et al., 4th edition (1953), p. 194, Fig. 210).

In a preferred embodiment the process is carried out using an injector-mixing nozzle, while a suspension of the polymers in the diluent is withdrawn from a reactor and at least in part recycled to the reactor via the injector-mixing nozzle while the injector-mixing nozzle draws in one or more of the monomers through at least one opening in its (side)wall, at most part of the suspension being removed from the system. It is found that by recirculating the suspension and repassing the suspension through the mechanical contact zone, the solid polymer particles are forced to grow in a relatively regular shape.

Although the injector-mixing nozzle can be placed at any place on the reactor wall very good polymerization results can be obtained when the injector-mixing nozzle is situated at the top of the reactor and the suspension of the polymer particles in the diluent is removed from the reactor at its bottom. Therefore the reactor is preferably provided at its top with an injector-mixing nozzle and the suspension of the polymers in the diluent is preferably withdrawn from the bottom of the reactor. It is at least in part recycled via the top of the injector-mixing nozzle through which it is injected into the top of the reactor, the monomers being sucked up through one or more openings in the side wall of the injector-mixing nozzle.

In order to obtain a high production efficiency of the polymers in the present process the concentration of the polymers in the suspension should be as high as possible. On the other hand the amount of polymer per cubic metre of suspension is limited by practical restrictions: at too high a polymer concentration the suspension cannot be recycled by a slurry pump and it cannot pass through the injector-mixing nozzle any more. The concentration of the polymers in the suspension is preferably kept at a level of at least 5 %wt and at most 60 %wt.

To achieve a sufficiently high productivity, the reaction mixture should be present in the reactor for a certain period of time. It has been found that an average residence time of the suspension in the reactor is advantageously in the range from 1 to 30 hours.

The preferred residence time of the suspension in the reactor and the preferred linear velocity of the suspension through the injector-mixing nozzle together determine the ratio between the volume of the suspension, being recycled per hour, and the volume of the reactor. This ratio is advantageously in the range from 2 to 100.

The polymerization reaction is slightly exotherm. If it is carried out on a relatively small scale the ratio of the outer surface of the reactor and its volume is such that more heat is lost through the reactor wall than is produced by the reaction. Therefore, the suspension of polymers in diluent is preferably heated when being recycled to injector-mixing nozzle, if the process is operated in a relatively small system. On the other hand in relatively large scale operations more heat is produced by the polymerization reaction than is lost through the walls of the apparatus. Therefore, in that case the recycled suspension of polymers in diluent is preferably cooled before being injected into the reactor.

For practical reasons the reactor is suitably not totally filled with suspension during the present process, so that above a certain level of suspension a gas cap containing one or more of the monomers to be polymerized is present in the top of the reactor. Suitably the volume of the gas cap is not more than 40% of the reactor volume.

The injector-mixing nozzle can discharge into the reactor above or below the level of the suspension. In order to minimize fouling preference is given to a discharge below the suspension level.

Advantageously a gas mixture comprising monomer(s) to be polymerized is withdrawn through the reactor wall from the gas cap and recycled to the opening(s) in the side wall of the injector-mixing nozzle(s) and fresh feed comprising monomer(s) is added to the recycle gas mixture. In this way the mass of gas sucked in by the injector-mixing nozzle(s) is increased as compared with a case in which no recycle of monomers from the gas cap takes place. By the increase of the dispersed gas mass in the injector-mixing nozzle(s) and in the reactor the reaction conditions are improved, leading to a higher polymer bulk density.

A further advantage of the recycle of the monomers from the gas cap to the injector-mixing nozzle is that in this manner the temperature of the reactor can advantageously be controlled by cooling or heating the gas mixture in a heat exchanger outside the reactor.

This control can be further improved if the fresh feed comprising the monomers is added to the recycle gas mixture before it is cooled or heated.

As mentioned hereinbefore the reaction temperature can also be controlled by cooling or heating of the recycle suspension stream. Preference is, however, given to an operation in which only the recycle gas stream is used for reaction temperature control by heating or cooling thereof.

The present process can be operated in batch or continuously, the latter being preferred.

In a continuous process part of the suspension is continuously removed from the operation system and the diluent is separated from the polymers. The diluent is preferably recycled to the system, advantageously after separation of spent catalyst therefrom and addition of fresh catalyst thereto. The polymers are obtained as a final product of the process.

The volume of the suspension being removed from the system is suitably in the range from 0.03 to 1.0 m³ per hour and per m³ reactor suspension volume.

It is known that in the batchwise preparation of the polymers in question, reactor fouling can be combated by, before contacting the monomers with the catalyst, suspending a polymer having substantially the same composition as the polymer to be prepared in the diluent in a quantity given by the formula a≥100xbxc, in which a denotes the number of grams of the polymer per litre diluent, b the number of metres of the polymer's mean particle size and c the number of kg/m³ of the polymer's bulk density. If the polymer preparation according to the invention is accomplished batchwise, it is likewise preferred to make use of this finding.

In the process of the invention, a catalyst is used which is capable of catalysing the formation of the linear alternating polymers mentioned hereinbefore, starting from a mixture of carbon monoxide and one or more olefinically unsaturated compounds. Catalysts that are suitable for the present purpose are, inter alia, those including a Group VIII metal. In the present patent application, Group VIII metals are understood to be the noble metals ruthenium, rhodium, palladium, osmium, iridium and platinum, as well as the iron group metals iron, cobalt and nickel. Preference is given to catalysts which include palladium, nickel or cobalt as the Group VIII metal. Special preference is given to palladium as the Group VIII metal. If the catalysts that are used in the process of the invention comprise a Group VIII metal, they are incorporated in the catalyst preferably in the form of a salt of a carboxylic acid, in particular in the form of an acetate.

In addition to a Group VIII metal, the catalysts preferably include a bidentate ligand which can form a complex with the Group VIII metal via two phosphorus-containing, nitrogen-containing or sulphur-containing dentate groups. When a nitrogen bidentate ligand is used, preference is given to compounds of the general formula 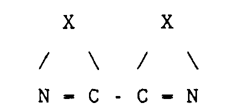 wherein X represents an organic bridging group containing three or four atoms in the bridge at least two of which are carbon atoms, such as 2,2'-bipyridine and 1,10-phenanthroline. When use is made of a sulphur bidentate ligand, it is preferred to use compounds of the general formula R¹S-R-SR¹, wherein each R¹ independently is an optionally polarly-substituted hydrocarbyl group and R is a bivalent organic bridging group which has at least two carbon atoms in the bridge, such as 1,2-bis(ethylthio)ethane and cis-1,2-bis(benzylthio)ethane. Preference is given to the use of phosphorus bidentate ligands of the general formula (R¹)₂P-R-P(R¹)₂, wherein R and R¹ have the meanings given hereinbefore. Further it is preferred to use such phosphorus bidentate ligands in which R¹ represents an aromatic hydrocarbyl group having at least one alkoxy substituent in a position ortho in respect to the phosphorus atom. A compound which is very suitable for the present purpose is 1,3-bis[bis(2-methoxyphenyl)phosphino]propane.

When a nitrogen or sulphur bidentate ligand is used in the catalysts, the applied quantity is preferably 0.5-100 and in particular 1-50 mol per mol of Group VIII metal. When a phosphorus bidentate ligand is used, the applied quantity is preferably 0.5-2 and in particular 0.75-1.5 mol per mol of Group VIII metal.

In addition to a Group VIII metal and a phosphorus, nitrogen or sulphur bidentate ligand, the catalysts preferably include an anion of an acid with a pKa of less than 6, more preferably an anion of an acid with a pKa less than 4 and in particular an anion of an acid with a pKa of less than 2. Examples of suitable acids with a pKa of less than 2 are sulphonic acids, such as paratoluenesulphonic acid, and halocarboxylic acids, such as trifluoroacetic acid. The anion of an acid with a pKa of less than 6 can be incorporated in the catalysts in the form of an acid and/or in the form of a salt of a non-noble transition metal such as a chromium or iron salt. The anion is preferably present in the catalysts in a quantity of 1-100 and in particular 2-50 mol per mol of Group VIII metal.

Apart from catalysts on the basis of the three components named hereinbefore, viz. a) a Group VIII metal compound, b) an acid with a pKa of less than 6 or a non-noble transition metal salt thereof, and c) a bidentate ligand containing two phosphorus-containing, nitrogen-containing or sulphur-containing dentate groups, use may also be made of corresponding catalysts based on two components by combining components a) and b), such as by the use of palladium trifluoroacetate or palladium para-tosylate or by combining the components b) and c), such as by the use of ortho(diphenylphosphino)benzenesulphonic acid or 3-(diphenylphosphino)sulphonic acid.

In order to increase the activity of the Group VIII metal containing catalysts, an organic oxidant may be additionally incorporated therein, for example a quinone, such as a 1,4-quinone, or a nitro compound. For that purpose, 1,4-benzoquinone and 1,4-naphthoquinone are very suitable. The quantity of organic oxidant used preferably amounts to 5-5,000 and in particular 10-1,000 mol per mol Group VIII metal.

Olefinically unsaturated compounds that can be polymerized with carbon monoxide by using the process of the invention are compounds consisting exclusively of carbon and hydrogen as well as compounds which contain, in addition to carbon and hydrogen, one or more hetero-atoms. The process of the invention is preferably applied for the preparation of polymers of carbon monoxide with one or more olefinically unsaturated hydrocarbons. Examples of such suitable hydrocarbon monomers are ethene, propene, butene-1, hexene-1, octene-1, styrene, cyclopentene, norbornene and dicyclopentadiene. The process of the invention is in particular very suitable for application in the preparation of copolymers of carbon monoxide with ethene and for the preparation of terpolymers of carbon monoxide with ethene and an α-olefin, in particular propene.

The preparation of the polymers is carried out in a diluent in which the catalyst is dissolved and in which the formed polymers are insoluble or virtually insoluble, thus forming a suspension. Lower aliphatic alcohols and in particular methanol are very suitable as diluent.

The quantity of catalyst composition employed in the process of the invention may vary within wide limits. When a Group VIII metal-containing catalyst is employed, it is preferred to use such a quantity of catalyst composition as to comprise 10⁻⁷-10⁻³ and in particular 10⁻⁶-10⁻⁴ mol of Group VIII metal per mol of olefinically unsaturated compound to be polymerized.

The process of the invention is preferably carried out at a temperature of 25-150 °C and a pressure of 2-150 bar and in particular at a temperature of 30-130 °C and a pressure of 5-100 bar. The molar ratio of olefinically unsaturated compounds relative to carbon monoxide is preferably 10:1-1:10 and in particular 5:1-1:5. The process of the invention is preferably carried out in a reactor containing more than 1,000 kg diluent.

The invention will now be illustrated with the aid of a Figure.

A solution of a catalyst in a diluent is introduced via a line (1) into a line (2) through which a suspension of polymers in the diluent is recycled to an injector-mixing nozzle (3). Through one or more openings in the side wall of the injector-mixing nozzle (3) the suspension sucks in a gas consisting of monomers to be polymerized, e.g. CO and C₂H₄, which are introduced into the injector-mixing nozzle (3) via a line (4). Fresh monomers are introduced via a line (5) into the line (4) through which non-polymerized monomers are recycled from a gas cap (6) being present in the upper part of a reactor (7) the lower part of which contains the suspension (8) of the polymers in the diluent. A dotted line (9) in the Figure denotes the upper level of the suspension (8) in the reactor (7).

By means of heating or cooling in a heat exchanger (10) the gas mixture passing through the line (4) is maintained at the correct operating temperature. Via the lower outlet opening of the injector-mixing nozzle (3) the mixture of fresh and recycled monomers and recycled suspension of polymers in diluent is introduced into the reactor (7) below the level (9) of the suspension (8).

Via a line (11) the suspension is withdrawn from the bottom of the reactor (7) and by means of pump (12) it is recycled via a line (13) and the line (2) to the top of the injector-mixing nozzle (3). By means of heating or cooling in a heat exchanger (14) the recycled suspension in the line (13) is maintained at the correct operating temperature.

Via a line (15) a suspension of product polymers in diluent is withdrawn from the system. By suitable separation means (not shown), such as a centrifuge or a filter, the product polymers are separated from the diluent, containing spent catalyst. The spent catalyst is removed from the diluent, suitably by distillation. Fresh catalyst is added to the diluent whereupon the solution of the fresh catalyst in the diluent is introduced into the system via the line (1).

The invention will now be further elucidated by means of the following Example.

### EXAMPLE 1

In a batch process as illustrated by the Figure the reactor (7) was charged with 31 kg of methanol and with an alternating polymer of carbon monoxide and ethene in a quantity of 4 %w, relative to the weight of the methanol. The system was pressurised with 15.6 bar of carbon monoxide and 7.0 bar of ethylene. The suspension present in the reactor was pumped and recycled through line (11) and injection-mixing nozzle (3) at a rate of about 0.55 kg/s, the power input delivered to the system via pump (12) being about 10 kW/m³ suspension. The monomers were recycled through line (4) to the injection-mixing nozzle (3). Line (15) was closed. The temperature of the suspension was brought to and maintained at 84 °C and the resulting pressure was maintained by feeding a 1:1 mixture of carbon monoxide and ethylene through line (5). At various points in time portions of a catalyst solution containing palladium acetate, 1,3-bis[bis(2-methoxyphenyl)phosphine]propane and trifluoroacetic acid in acetone were fed through line (1) to the reactor to the effect that an initial palladium concentration in the suspension of 1.4 ppmw, relative to the weight of methanol, was accomplished and that after 7, 11, 13 and 15 hours the palladium concentration amounted to 2.75, 4.1, 5.5 and 6.9 ppmw, respectively, relative to the weight of methanol.

After 19 hours the polymer product was removed from the reactor through line (15) and collected by filtration, washed with methanol and dried. 14.4 kg of polymer was thus prepared, having a bulk density of 600 kg/m³.

## Claims

1. Process for the preparation of polymers in which process linear alternating polymers of carbon monoxide with one or more olefinically unsaturated compounds are prepared by contacting the monomers at an elevated temperature and pressure with a catalyst in a diluent in which diluent the catalyst is dissolved and the formed polymers form a suspension, which contacting takes place in a system comprising at least one reactor and at least one mechanical contact zone wherein the volume of the suspension present in the mechanical contact zone(s) is substantially less than the volume of the suspension present in the reactor(s), the suspension is passed through the mechanical contact zone(s) and high shearing forces of at least 0,25 kW/m³, relative to the total volume of the polymer suspension present in the reactor(s) are exerted on the polymer particles dispersed in the suspension present in the mechanical contact zone(s).

2. Process as claimed in claim 1, characterized in that the ratio of the total volume of the suspension present in the contact zone(s) to the total volume of the suspension present in the reactor(s) amounts to from 1:500000 to 1:20.

3. Process as claimed in claim 2, characterized in that the ratio of the total volume of the suspension present in the contact zone(s) to the total volume of the suspension present in the reactor(s) amounts to from 1:50000 to 1:50.

4. Process as claimed in any of claims 1 to 3, characterized in that the mechanical power transmitted in the mechanical contact zone(s) to the polymer suspension is in the range of from 2 to 40 kW/m³, relative to the total volume of the polymer suspension present in the reactor(s).

5. Process as claimed in claims 4, characterized in that the mechanical power transmitted in the mechanical contact zone(s) to the polymer suspension is in the range of from 4 to 25 kW/m³, relative to the total volume of the polymer suspension present in the reactor(s).

6. Process as claimed in any of claims 1-5, characterized in that the mechanical contact zone comprises a device suitable for intensive mixing, dispersing, homogenising, emulsifying and/or size reduction of solid particles in liquid media.

7. Process as claimed in claim 6, characterized in that the mechanical contact zone comprises an injector-mixing nozzle.

8. Process as claimed in any of claims 1 to 7, characterized in that the system comprises two or more reactors, the suspension is withdrawn from a first reactor and the suspension is discharged into a second reactor after having been subjected to high shearing forces in the mechanical contact zone.

9. Process as claimed in claim 7, characterized in that a suspension of the polymers in the diluent is withdrawn from a reactor and at least in part recycled to the reactor via the injector-mixing nozzle while the injector-mixing nozzle draws in one or more of the monomers through at least one opening in its wall, at most part of the suspension being removed from the system, in that the reactor is provided at its top with the injector-mixing nozzle, the suspension of the polymer particles in the diluent is withdrawn from the bottom of the reactor and is at least in part recycled via the top of the injector-mixing nozzle through which it is injected into the top of the reactor.

10. Process as claimed in claim 9, characterized in that the suspension of the polymers in the diluent is cooled or heated while being recycled to the injector-mixing nozzle, in that the reactor contains a gas cap, comprising one or more of the monomers, above the level of the suspension of the polymers in the diluent and the injector-mixing nozzle discharges below the level of the suspension, and in that a gas mixture comprising monomer(s) is withdrawn from the gas cap and recycled to the opening(s) in the side wall of the injector-mixing nozzle.

11. Process as claimed in claim 10, characterized in that the concentration of the polymers in the suspension is from 5 to 60 %wt, in that the ratio between the volume of the suspension, being recycled per hour, and the volume of the reactor is in the range from 2 to 100 and in that the average residence time of the suspension in the system is in the range from 1 to 30 hours.

12. Process as claimed in any of claims 1-11, characterized in that the catalyst contains a Group VIII metal.

13. Process as claimed in claim 12, characterized in that the catalyst contains palladium as Group VIII metal and, in addition to a Group VIII metal, a phosphorus bidentate ligand of the general formula (R¹)₂P-R-P(R¹)₂, wherein each R¹ independently represents a hydrocarbyl group which is optionally polarly substituted and R is a bivalent organic bridging group which has at least two carbon atoms in the bridge, and an anion of an acid with a pKa of less than 6.

14. Process as claimed in claim 13, characterized in that each R¹ represents an aromatic hydrocarbyl group having at least one alkoxy substituent in a position ortho in respect to the phosphorus atom.

15. Process as claimed in claim 13 or 14, characterized in that the catalyst contains the phosphorus bidentate ligand in a quantity of 0.75-1.5 mol per mol Group VIII metal and an anion of an acid with a pKa of less than 6 in a quantity of 2-50 mol per mol Group VIII metal.

16. Process as claimed in any of claims 1-15, characterized in that hydrocarbons such as ethene or a mixture of ethene with another olefinically unsaturated hydrocarbon such as propene are used as olefinically unsaturated compounds.

17. Process as claimed in any of claims 12-16, characterized in that per mol of olefinically unsaturated compound to be polymerized, a quantity of Group VIII metal-containing catalyst is used which contains 10⁻⁶-10⁻⁴ mol of Group VIII metal, and in that it is accomplished at a temperature of 30-130 °C, a pressure of 5-100 bar, a molar ratio of olefinically unsaturated compounds to carbon monoxide of from 5:1 to 1:5 and in a lower aliphatic alcohol as diluent.

## Patentansprüche

1. Verfahren zur Herstellung von Polymeren, bei dem man lineare alternierende Polymere aus Kohlenmonoxid und einer oder mehreren olefinisch ungesättigten Verbindungen dadurch herstellt, daß man die Monomere bei erhöhter Temperatur und erhöhtem Druck mit einem Katalysator in einem Verdünnungsmittel, in dem der Katalysator gelöst ist, in Berührung bringt und die gebildeten Polymere eine Suspension bilden, wobei das Inberührung bringen in einem System erfolgt, das aus mindestens einem Reaktor und mindestens einer mechanischen Kontaktzone besteht, wobei das in der mechanischen Kontaktzone bzw. den mechanischen Kontaktzonen vorliegende Suspensionsvolumen wesentlich kleiner als das in dem Reaktor bzw. den Reaktoren vorliegende Suspensionsvolumen ist, man die Suspension durch die mechanische Kontaktzone bzw. die mechanischen Kontaktzonen leitet und auf die Polymerteilchen, die in der in der mechanischen Kontaktzone bzw. den mechanischen Kontaktzonen vorliegenden Suspension gelöst sind, große Scherkräfte von mindestens 0,25 kW/m³, bezogen auf das in dem Reaktor bzw. den Reaktoren vorliegenden Gesamtvolumen der Polymersuspension, ausübt.

2. Verfahren nach Anspruch 1, dadurch gekennzeichnet, daß das Verhältnis des in der Kontaktzone bzw. den Kontaktzonen vorliegenden Gesamtvolumens der Suspension zum in dem Reaktor bzw. den Reaktoren vorliegenden Gesamtvolumen der Suspension 1:500.000 bis 1:20 beträgt.

3. Verfahren nach Anspruch 2, dadurch gekennzeichnet, daß das Verhältnis des in der Kontaktzone bzw. den Kontaktzonen vorliegenden Gesamtvolumens der Suspension zum in dem Reaktor bzw. den Reaktoren vorliegenden Gesamtvolumen der Suspension 1:50.000 bis 1:50 beträgt.

4. Verfahren nach einem der Ansprüche 1-3, dadurch gekennzeichnet, daß die in der mechanischen Kontaktzone bzw. den mechanischen Kontaktzonen auf die Polymersuspension übertragene mechanische Leistung, bezogen auf das in dem Reaktor bzw. den Reaktoren vorliegende Gesamtvolumen der Polymersuspension, 2 bis 40 kW/m³ beträgt.

5. Verfahren nach Anspruch 4, dadurch gekennzeichnet, daß die in der mechanischen Kontaktzone bzw. den mechanischen Kontaktzonen auf die Polymersuspension übertragene mechanische Leistung, bezogen auf das in dem Reaktor bzw. den Reaktoren vorliegende Gesamtvolumen der Polymersuspension, 4 bis 25 kW/m³ beträgt.

6. Verfahren nach einem der Ansprüche 1-5, dadurch gekennzeichnet, daß die mechanische Kontaktzone eine Einrichtung zum intensiven Mischen, Dispergieren, Homogenisieren, Emulgieren und/oder Zerkleinern von festen Teilchen in flüssigen Medien enthält.

7. Verfahren nach Anspruch 6, dadurch gekennzeichnet, daß die mechanische Kontaktzone eine Injektormischdüse enthält.

8. Verfahren nach einem der Ansprüche 1 bis 7, dadurch gekennzeichnet, daß das System zwei oder mehr Reaktoren enthält, man die Suspension aus einem ersten Reaktor abzieht und sie nach Behandlung mit großen Scherkräften in der mechanischen Kontaktzone in einen zweiten Reaktor einträgt.

9. Verfahren nach Anspruch 7, dadurch gekennzeichnet, daß man aus einem Reaktor eine Suspension der Polymere im Verdünnungsmittel abzieht und mindestens teilweise über die Injektormischdüse in den Reaktor zurückführt, während die Injektormischdüse durch mindestens eine Öffnung in ihrer Wand eines oder mehrere der Monomere einzieht, man die Suspension höchstens teilweise aus dem System austrägt, der Reaktor am Kopf mit der Injektormischdüse versehen ist, man die Suspension der Polymerteilchen im Verdünnungsmittel am Boden des Reaktors abzieht und sie mindestens teilweise über den Kopf der Injektormischdüse zurückführt und über sie in den Kopf des Reaktors einspritzt.

10. Verfahren nach Anspruch 9, dadurch gekennzeichnet, daß man die Suspension der Polymere im Verdünnungsmittel bei der Rückführung zur Injektormischdüse abkühlt oder erhitzt, der Reaktor über dem Niveau der Suspension der Polymere im Verdünnungsmittel einen eines oder mehrere der Monomere enthaltenden Gasraum enthält und die Injektormischdüse sich unterhalb des Suspensionsniveaus entlädt und man aus dem Gasraum ein Monomer bzw. Monomere enthaltendes Gasgemisch abzieht und zu der Öffnung bzw. den Öffnungen in der Seitenwand der Injektormischdüse zurückführt.

11. Verfahren nach Anspruch 10, dadurch gekennzeichnet, daß die Konzentration der Polymere in der Suspension 5 bis 60 Gew.-%, das Verhältnis des pro Stunde zurückgeführten Volumens der Suspension zum Reaktorvolumen 2 bis 100 und die mittlere Verweilzeit der Suspension im System 1 bis 30 Stunden beträgt.

12. Verfahren nach einem der Ansprüche 1-11, dadurch gekennzeichnet, daß der Katalysator ein Metall der Gruppe VIII enthält.

13. Verfahren nach Anspruch 12, dadurch gekennzeichnet, daß der Katalysator als Metall der Gruppe VIII Palladium und neben einem Metall der Gruppe VIII einen zweizähnigen Phosphorliganden der allgemeinen Formel (R¹)₂P-R-P(R¹)₂, worin R¹ jeweils unabhängig für eine gegebenenfalls polar substituierte Kohlenwasserstoffgruppe und R für eine zweiwertige organische Brückengruppe mit mindestens zwei Kohlenstoffatomen in der Brücke steht, und ein Anion einer Säure mit einem pKa-Wert unter 6 enthält.

14. Verfahren nach Anspruch 13, dadurch gekennzeichnet, daß R¹ jeweils für eine aromatische Kohlenwasserstoffgruppe mit mindestens einem Alkoxysubstituenten in einer ortho-Stellung zum Phosphoratom steht.

15. Verfahren nach einem der Ansprüche 13 oder 14, dadurch gekennzeichnet, daß der Katalysator den zweizähnigen Phosphorliganden in einer Menge von 0,75-1,5 mol pro Mol Metall der Gruppe VIII und ein Anion einer Säure mit einem pKa-Wert unter 6 in einer Menge von 2-50 mol pro Mol Metall der Gruppe VIII enthält.

16. Verfahren nach einem der Ansprüche 1-15, dadurch gekennzeichnet, daß man als olefinisch ungesättigte Verbindungen Kohlenwasserstoffe wie Ethen oder ein Gemisch aus Ethen und einem anderen olefinisch ungesättigten Kohlenwasserstoff wie Propen einsetzt.

17. Verfahren nach einem der Ansprüche 12-16, dadurch gekennzeichnet, daß man pro Mol zu polymerisierender olefinisch ungesättigter Verbindung einen 10⁻⁶-10⁻⁴ mol Metall der Gruppe VIII enthaltenden Katalysator einsetzt und daß man es bei einer Temperatur von 30-130°C, einem Druck von 5-100 bar, einem Molverhältnis von olefinisch ungesättigten Verbindungen zu Kohlenmonoxid von 5:1 bis 1:5 und in einem niedere aliphatischen Alkohol als Verdünnungsmittel durchführt.

## Revendications

1. Procédé de préparation de polymères, conformément auquel on prépare des polymères alternants et linéaires du monoxyde de carbone avec un ou plusieurs composés à insaturation oléfinique, en mettant les monomères en contact, à température et pression élevées, avec un catalyseur dans un diluant, dans lequel diluant le catalyseur est dissous et les polymères formés forment une suspension, laquelle mise en contact a lieu dans un système comprenant au moins un réacteur et au moins une zone de contact mécanique, où le volume de la suspension qui se trouve dans la ou les zones de contact mécanique est sensiblement inférieure au volume de la suspension qui se trouve dans le ou les réacteurs, on fait passer la suspension à travers la ou les zones de contact et on exerce des forces de cisaillement élevées sur les particules de polymère dispersées dans la suspension présente dans la ou les zones de contact mécanique d'au moins 0,25 kW/m³, calculé sur le volume total de la suspension de polymère se trouvant dans le ou les réacteurs.

2. Procédé suivant la revendication 1, caractérisé en ce que le rapport du volume total de la suspension qui se trouve dans la ou les zones de contact au volume total de la suspension qui se trouve dans le ou les réacteurs s'élève de 1:500000 à 1:20.

3. Procédé suivant la revendication 2, caractérisé en ce que le rapport du volume total de la suspension qui se trouve dans la ou les zones de contact au volume total de la suspension qui se trouve dans le ou les réacteurs s'élève de 1:50000 à 1:50.

4. Procédé suivant l'une quelconque des revendications 1 à 3, caractérisé en ce que la puissance mécanique transmise dans la ou les zones de contact mécanique à la suspension de polymère fluctue dans la plage de 2 à 40 kW/m³, par rapport au volume total de la suspension de polymères qui se trouve dans le ou les réacteurs.

5. Procédé suivant la revendication 4, caractérisé en ce que la puissance mécanique transmise dans la ou les zones de contact mécanique à la suspension de polymère fluctue dans la plage de 4 à 25 kW/m³, par rapport au volume total de la suspension de polymères qui se trouve dans le ou les réacteurs.

6. Procédé suivant l'une quelconque des revendications 1 à 5, caractérisé en ce que la zone de contact mécanique comprend un dispositif convenant à assurer une réduction de calibre, un émulsionnement, une homogénéisation, une dispersion ou un mélange intensif des particules solides dans des milieux liquides.

7. Procédé suivant la revendication 6, caractérisé en ce que la zone de contact mécanique comprend un ajutage mélangeur-injecteur.

8. Procédé suivant l'une quelconque des revendications 1 à 7, caractérisé en ce que le système comprend deux ou plus de deux réacteurs, la suspension est prélevée d'un premier réacteur et la suspension est déchargée dans un second réacteur, après avoir été soumise à des forces de cisaillement élevées dans la zone de contact mécanique.

9. Procédé suivant la revendication 7, caractérisé en ce qu'une suspension des polymères dans le diluant est soutirée d'un réacteur et au moins en partie recyclée dans le réacteur, par l'intermédiaire d'un ajutage mélangeur-injecteur, cependant que l'ajutage mélangeur-injecteur aspire un ou plusieurs des monomères, à travers au moins une ouverture pratiquée dans sa paroi, au plus une partie de la suspension étant évacuée du système, en ce que le réacteur est pourvu en tête de l'ajutage mélangeur-injecteur, la suspension des particules de polymère dans le diluant est soutirée par le fond du réacteur et au moins en partie recyclée par la tête de l'ajutage mélangeur-injecteur, à travers lequel il est injecté en tête du réacteur.

10. Procédé suivant la revendication 9, caractérisé en ce que la suspension des polymères dans le diluant est refroidie ou chauffée cependant qu'elle est recyclée en direction de l'ajutage mélangeur-injecteur, en ce que le réacteur contient une coiffe de gaz, comprenant un ou plusieurs des monomères, au dessus du niveau de la suspension des polymères dans le diluant et l'ajutage mélangeur-injecteur, se décharge en dessous du niveau de la suspension et en ce qu'un mélange de gaz comprenant un ou plusieurs monomères est soutiré, à partir de la coiffe de gaz et recyclé vers la ou les ouvertures dans la paroi latérale de l'ajutage mélangeur-injecteur.

11. Procédé suivant la revendication 10, caractérisé en ce que la concentration des polymères dans la suspension varie de 5 à 60% en poids, en ce que le rapport entre le volume de la suspension, recyclé par heure et le volume du réacteur varient de 2 à 100 et en ce que la durée de séjour moyenne de la suspension dans le système fluctue de 1 à 30 heures.

12. Procédé suivant l'une quelconque des revendications 1 à 11, caractérisé en ce que le catalyseur contient un métal du groupe VIII.

13. Procédé suivant la revendication 12, caractérisé en ce que le catalyseur contient du palladium, à titre de métal du groupe VIII et, en plus du métal du groupe VIII, un ligand bidentate phosphoré de la formule générale (R¹)₂P-R-P(R¹)₂, dans laquelle les symboles R¹ représentent chacun indépendamment un radical hydrocarbyle qui est éventuellement à substitution polaire et R représente un groupe de pontage organique bivalent qui comporte au moins deux atomes de carbone dans le pont et un anion d'un acide qui possède un pKa inférieur à 6.

14. Procédé suivant la revendication 13, caractérisé en ce que chaque symbole R¹ représente un groupe hydrocarbyle aromatique comportant au moins un substituant alcoxy en une position en ortho, par rapport à l'atome de phosphore.

15. Procédé suivant la revendication 13 ou 14, caractérisé en ce que le catalyseur contient le ligand bidentate phosphoré, en une proportion de 0,75 à 1,5 mole, par mole de métal du groupe VIII et un anion d'un acide qui possède un pKa inférieur à 6, en une quantité de 2 à 50 moles, par mole de métal du groupe VIII.

16. Procédé suivant l'une quelconque des revendications 1 à 15, caractérisé en ce que l'on utilise des hydrocarbures comme l'éthène, ou un mélange d'éthène et d'un autre hydrocarbure à insaturation oléfinique, comme le propène, à titre de composés à insaturation oléfinique.

17. Procédé suivant l'une quelconque des revendications 12 à 16, caractérisé en ce que, par mole de composé à insaturation oléfinique à polymériser, on utilise une proportion de catalyseur contenant un métal du groupe VIII, qui contient de 10⁻⁶ à 10⁻⁴ mole de métal du groupe VIII et en ce qu'on l'entreprend à une température de 30 à 130°C sous une pression de 5 à 100 bars, avec un rapport molaire des composés à insaturation oléfinique au monoxyde de carbone qui varie de 5:1 à 1:5 et dans un alcool aliphatique inférieur servant de diluant.
